# EUROPÄISCHE PATENTANMELDUNG

(11) **EP 0 861 585 A1**
(43) Veröffentlichungstag der Anmeldung: **02.09.1998**
(21) Anmeldenummer: 98102666.9
(22) Anmeldetag: 17.02.1998
(51) Int. Cl.: A01F 25/20

(54) **Fräse, insbesondere für Geräte zur Entnahme von Silage aus einem Fahrsilo**

(30) Priorität: 28.02.1997 DE 29703598 U
(71) Anmelder: von der Heide Maschinenbau GmbH & Co. KG, 49479 Ibbenbüren 2 - Laggenbeck (DE)
(72) Erfinder: von der Heide, Hans, 49479 Ibbenbüren (DE)
(74) Vertreter: Schulze Horn & Partner

(57) **Zusammenfassung**

Die vorliegende Erfindung betrifft eine Fräse (1), insbesondere für Geräte zur Entnahme von Silage aus einem Fahrsilo, mit einer Fräswalze (2), die aus einem rohrförmigen, drehantreibbaren Walzengrundkörper (20) und aus mehreren fest an diesem angebrachten, von diesem abestehenden Fräselementen (22) besteht.

Die neue Fräse ist dadurch gekennzeichnet, daß die Fräselemente (22) starre zahnförmige Zinken mit in Hauptdrehrichtung der Fräswalze (2) abgewinkelten oder abgebogenen freien Endbereichen (25) sind.

## Beschreibung

Die vorliegende Erfindung betrifft eine Fräse, insbesondere für Geräte zur Entnahme von Silage aus einem Fahrsilo, mit einer Fräswalze, die aus einem rohrförmigen, drehantreibbaren Walzengrundkörper und aus mehreren fest an diesem angebrachten, von diesem abestehenden Fräselementen besteht.

Aus der DE 30 33 824 A1 ist ein Gerät zum Abtragen, Laden, Transportieren, Bereiten und Austeilen von Tierfutter bekannt, welches unter anderem eine an der Rückseite angeordnete, höhenverstellbare Vorrichtung zum Abtrennen, Zerkleinern und zum Schleudertransport des Silagegutes von Fahrsilos oder Mieten aufweist. Diese Vorrichtung besteht aus einem rechteckigen Rahmen in der Breite des Gerätes mit rückwärts und seitlich angeordneten, um horizontale Achsen rotierenden Messern. Der Rahmen ist in vertikalen, mit Hubeinrichtungen ausgestatteten Führungen angeordnet und innerhalb des von den Messern umgrenzten Raumes mit einer Schlegelwalze ausgestattet. An der Schlegelwalze, die um eine horizontale Achse rotiert, ist eine Vielzahl von Schlegeln gelenkig befestigt, die den Anschnitt der Silage zerkrümeln und das krümelige Silagegut mit Hilfe einer Transportschurre in einen Laderaum des Gerätes befördern. Jedes der an dem Rahmen vorgesehenen Messer und die Schlegelwalze sind durch je einen eigenen hydraulischen Einzelantrieb drehantreibbar.

Ersichtlich ist die bekannte Vorrichtung sehr aufwendig konstruiert, insbesondere durch die Erfordernis von mehreren Einzelantrieben. Dies verteuert die Herstellung und erhöht den Wartungsaufwand. Außerdem ist für den Betrieb des Gerätes eine hohe Antriebsleistung erforderlich, was zu hohen Anschaffungs- und Betriebskosten führt.

Weiterhin sind aus der Praxis Fräswalzen bekannt, bei denen am Walzengrundkörper vorstehende Blechstreifen in Form von zwei zur Mitte der Fräswalze hin fördernden Schnecken angebracht sind, wobei zusätzlich auf den Außenkanten der die Schnecken bildenden Bleche Schneidmesser sitzen. Durch Drehung der Fräswalze schneiden die Messer aus dem Silo Silage ab, die dann durch die Schneckenbleche zur Mitte der Fräswalze gefördert wird und von dort durch geeignete Fördermittel, z.B. eine Rutsche, in einen Laderaum eines zugehörigen Fahrzeuges gelangt. Auch bei dieser bekannten Fräswalze mit Schneckenblechen und Messern ist eine hohe Antriebsleistung erforderlich, was das zugehörige Gerät in der Anschaffung und im Unterhalt teuer macht.

Schließlich ist in der nicht vorveröffentlichten deutschen Patentanmeldung 196 50 618.2 des Anmelders eine Fräswalze der eingangs genannten Art beschrieben, bei der die Fräselemente Federzinken mit in Drehrichtung abgewinkelten oder abgebogenen freien Endbereichen sind. Bevorzugt ist dabei für jeden Federzinken am Walzengrundkörper eine eigene Zinkenhalterung vorgesehen, in der der zugehörige Federzinken lösbar gehaltert ist.

Mit dieser Fräswalze sind zwar bei geringem Antriebsleistungsbedarf gute Fräsergebnisse erzielbar, jedoch ist die Herstellung der Fräswalze relativ aufwendig, was zu hohen Herstellungskosten führt.

Es stellt sich deshalb für die vorliegende Erfindung die Aufgabe, eine Fräse der eingangs genannten Art zu schaffen, die aufgrund einer einfacheren Konstruktion kostengünstiger herstellbar ist und bei der mit relativ geringer Antriebsleistung eine gute Fräswirkung erzielt wird.

Die Lösung dieser Aufgabe gelingt erfindungsgemäß durch eine Fräse der eingangs genannten Art, die dadurch gekennzeichnet ist, daß die Fräselemente starre zahnförmige Zinken mit in Hauptdrehrichtung der Fräswalze abgewinkelten oder abgebogenen freien Endbereichen sind.

Mit der erfindungsgemäßen Fräse wird vorteilhaft erreicht, daß mit relativ geringer Antriebsleistung der Fräswalze eine hohe Abtragsrate von Silage aus dem Silo erzielt wird. Dies wird insbesondere dadurch erreicht, daß die Silage nicht mehr zuerst zerschnitten und dann abgefördert sowie gegebenenfalls zwischenzeitlich noch zerkleinert werden muß, sondern daß sie durch die Zinken unmittelbar vom Silo abgestreift oder abgekratzt wird, wobei der Abtrag durch eine aufgrund der Biegung der Zinken hervorgerufene schleppende oder ziehende Wirkung gefördert wird und gleichzeitig die im Silo verbleibende Silage kaum unerwünscht aufgelockert wird.

Weiter ist vorgesehen, daß die gedachten Verlängerungen der Mittelachsen der Endbereiche der Zinken in Richtung zum Walzengrundkörper im wesentlichen Tangenten an diesen bilden. Durch diese Ausrichtung der Endbereiche der Zinken wird ein optimaler Kompromiß zwischen einerseits der gewünschten schleppenden oder ziehenden Wirkung beim Silageabtrag und andererseits einem sicheren Abwurf der aus dem Silo abgefrästen Silage erzielt. Ein Festhängen von Silage, auch bei langfaserigem Gut, wie Grassilage, wird so ausgeschlossen.

Weiter ist bevorzugt vorgesehen, daß die Zinken mit gegenseitigem Versatz in Umfangsrichtung an dem Walzengrundkörper angeordnet sind. Auf diese Weise wird insbesondere ein über den Umfang der Fräswalze gleichmäßiger Kraftbedarf für den Drehantrieb erreicht, was mit dazu beiträgt, mit einer insgesamt relativ geringen Antriebsleistung auszukommen.

Eine Weiterbildung der Fräse sieht vor, daß die Zinken entlang einer oder mehrerer Schraubenlinien an dem Walzengrundkörper angeordnet sind.

Um bei möglichst geringen Material- und Arbeitskosten eine möglichst stabile Konstruktion der Fräswalze zu erzielen, wird vorgeschlagen, daß der Walzengrundkörper und die Zinken aus Stahl bestehen und miteinander verschweißt sind. Die Zinken selbst können beispielsweise Zuschnitte aus Flacheisen sein, die im Verbindungsbereich mit dem Walzengrundkörper mit einem dessen Außenradius entsprechenden Radius zugeschnitten sind. Auf diese Weise wird eine lange Schweißnaht ermöglicht, die für eine sehr feste Verbindung zwischen dem Zinken und dem Walzengrundkörper sorgt. Eventuell stumpf gewordene Zinken können bei Bedarf durch Zuschleifen wieder angespitzt werden; wenn ein Zinken nicht mehr brauchbar ist, kann er problemlos vom Walzengrundkörper komplett abgetrennt und durch einen neu anzuschweißenden Zinken ersetzt werden.

Bevorzugte Formen und relative Größenverhältnisse der einzelnen Teile der Zinken der Fräswalze sind in den Ansprüchen 6 und 7 beschrieben. Hiermit wird insbesondere eine besondere Stabilität der Zinken bei gleichzeitig guter Fräswirkung erzielt.

Zur Erzielung einer besonders kompakten Bauweise der Fräse ist bevorzugt vorgesehen, daß für den Drehantrieb der Fräswalze in dem Walzengrundkörper ein Drehantriebsmotor untergebracht ist. Bevorzugt wird hier ein Hydraulikmotor verwendet, der an sich bekannt ist und der auch in einer solchen Form zur Verfügung steht, daß er platzsparend im Inneren des Walzengrundkörpers untergebracht werden kann. Außerdem wird so der Motor gegen äußere Einwirkungen vollständig geschützt.

Um zu gewährleisten, daß während des Einsatzes der Fräse an einem Fahrsilo möglichst wenig von dem abgefrästen Futter verloren geht, ist vorgesehen, daß diese am freien Ende eines auf- und abwärts verstellbaren Silagefördermittels, z.B. einer nach oben offenen Silagerutsche angeordnet ist, daß in der Hauptdrehrichtung der Fräswalze deren in die Silage eingreifende Zinken sich von unten nach oben bewegen und daß das Silagefördermittel eine über der Fräswalze angeordnete Abdeckplatte umfaßt. Die Abdeckplatte sorgt dafür, daß die von der relativ schnell drehenden Fräswalze aus dem Silo gelöste Silage höchstens bis zur Unterseite der Abdeckplatte nach oben geworfen werden kann; von dort prallt die Silage ab und rutscht unter Schwerkraftwirkung in das Silagefördermittel, z.B. die Silagerutsche. Von dort kann die Silage auf geeignete Weise in einen Vorratsbehälter weitergefördert werden, der z.B. Teil eines an sich bekannten Futteraufbereitungs- und Futterverteilungsfahrzeuges ist.

Damit freie, für abgefräste Silage durchgängige Spalte zwischen der Vorderkante der Abdeckplatte und der Schnittfläche am Fahrsilo vermieden werden, ist vorgesehen, daß die Abdeckplatte in ihrer Plattenebene in Richtung zum freien Ende des Silagefördermittels ausschiebbar und umgekehrt einschiebbar ist.

Eine Weiterbildung diesbezüglich sieht vor, daß die Abdeckplatte in Ausschubrichtung durch eine Kraft vorbelastet oder vorbelastbar ist. Die erwähnte Kraft kann beispielsweise durch eine oder mehrere Federn aufgebracht werden. Alternativ ist auch eine Verschiebung durch eine Krafteinrichtung, z.B. eine hydraulische Kolben-Zylinder-Anordnung denkbar. In jedem Fall wird aber hiermit erreicht, daß sich die Abdeckplatte selbsttätig oder fernbetätigbar an die Schnittfläche des Fahrsilos anlegt, so daß keinerlei Spalt in diesem Bereich verbleibt, durch den abgefräste Silage austreten und verloren gehen könnte.

Um eine zuverlässige Funktion der verschiebbaren Abdeckplatte zu gewährleisten, ist vorgesehen, daß diese mit einer Verschiebungs-Synchronisiereinrichtung zum Schutz gegen Verkanten ausgestattet ist. Diese Synchronisiereinrichtung kann beispielsweise aus zwei Zahnstangen oder Kettenabschnitten bestehen, die an beiden Seiten der Abdeckplatte auf dieser angebracht sind und die mit zwei Ritzeln oder Zahnrädern im Eingriff stehen, die untereinander durch eine Welle drehfest verbunden sind. Für die Führung der Abdeckplatte reicht in diesem Fall eine einfache Gleitführung an den seitlichen Kanten, z.B. in je einem Schlitz zwischen zwei Gleitstäben.

Da sich die Fräse während ihres Einsatzes relativ zum Fahrsilo in Vertikalrichtung bewegt, wird vorgeschlagen, daß die freie äußere Kante der Abdeckplatte mit mehreren einzelnen oder einer durchgehenden Rolle versehen ist. Auf diese Weise wird sichergestellt, daß die Abdeckplatte sich nicht so weit in die Schnittfläche der Silage eindrücken kann, daß sie der Bewegung der Fräse nicht mehr folgen könnte. Außerdem wird so gewährleistet, daß die Abdeckplatte mit ihrer freien Vorderkante keine unerwünschte Auflockerung der Silage an der Silageschnittfläche verursacht.

Schließlich ist noch vorgesehen, daß der Drehantrieb der Fräswalze in seiner Drehrichtung umkehrbar ist. Hiermit wird insbesondere die Möglichkeit geschaffen, zu Beginn eines Fräsvorganges ganz oben nahe der Oberkante des Fahrsilos die Fräswalze zunächst mit einer Drehrichtung laufen zu lassen, bei der die mit der Silage in Eingriff tretenden Zinken sich von oben nach unten bewegen. Hierdurch wird eine Auflockerung der oberen, unbelasteten Silagelagen vermieden. Sobald eine gewisse Distanz von der Oberkante des Silos erreicht ist, kann die Drehrichtung der Fräswalze auf ihre in entgegengesetzter Richtung weisende Hauptdrehrichtung umgeschaltet werden, in der dann die Zinken in der weiter oben schon beschriebenen Art und Weise die Silage wirkungsvoll aus dem Silo abfräsen.

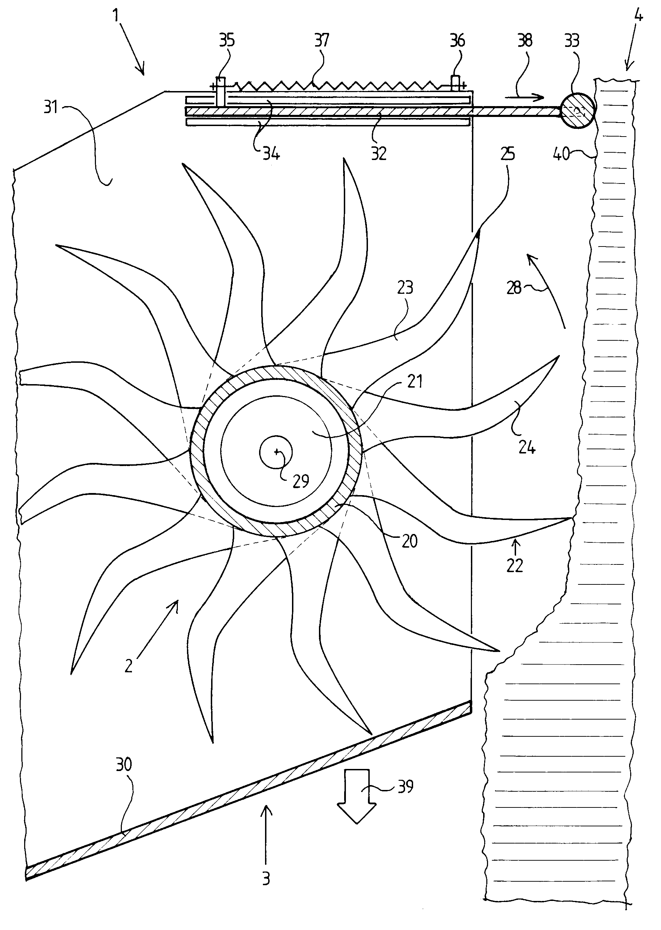

Ein Ausführungsbeispiel der Erfindung wird im folgenden anhand einer Zeichnung erläutert. Die einzige Figur der Zeichnung zeigt eine Silagefräse, die am freien Ende eines Silagefördermittels angeordnet ist, während ihres Einsatzes an einem Fahrsilo, in einem schematisierten Vertikalschnitt.

Die in der Zeichnung dargestellte Fräse 1 umfaßt als wesentlichen Bestandteil eine Fräswalze 2, die durch einen rohrförmigen Walzengrundkörper 20 gebildet ist, von dessen Außenumfang sich eine Vielzahl von starren zahnförmigen Zinken 22 nach außen erstreckt. Die Zinken 22 sind in Umfangsrichtung der Fräswalze 2 versetzt angeordnet, vorzugsweise in Form einer oder mehrerer Schraubenlinien. Die Zinken 22 sind untereinander identisch und besitzen jeweils einen relativ breiten Grundbereich 23, dessen dem Außenumfang des Walzengrundkörpers 20 zugewandte Kante entsprechend dem Außenumfang des Walzengrundkörpers 20 gerundet ist. In diesem Bereich sind die Zinken 22 mit dem Walzengrundkörper 20 verschweißt. Weiter nach außen werden die Zinken 22 schmaler und besitzen ein spitzes Ende 25. Zwischen dem Grundbereich 23 und dem Endbereich 25 weisen die Zinken einen gebogenen Bereich 24 auf. Die Biegung der Zinken 22 weist dabei in die durch den Drehpfeil 28 angegebene Hauptdrehrichtung der Fräswalze 2.

Zum Antrieb der Fräswalze 2 ist im Inneren des rohrförmigen Grundkörpers 20 ein Drehantriebsmotor 21 untergebracht, vorzugsweise ein Hydraulikmotor in an sich bekannter Ausführung. Durch diesen ist die Fräswalze 2 um ihre Längsmittelachse 29 drehantreibbar, wobei vorzugsweise die Drehrichtung bei Bedarf umkehrbar ist.

Weiterhin zeigt die Zeichnung als Teil der Fräse 1 den freien Endbereich eines Silagefördermittels 3, das hier in Form einer nach oben offenen Silagerutsche mit einem Boden 30 und zwei Seitenwänden 31 ausgeführt ist, wobei hier nur die in der Zeichnung hintere Seitenwand 31 sichtbar ist. An diesen Seitenwänden 31 ist die Fräswalze 2 in an sich bekannter Art und Weise gehaltert und gelagert.

Die Silagerutsche 3 besitzt oberhalb der Fräswalze 2 eine Abdeckplatte 32, die dazu dient, ein Herauswerfen von abgefräster Silage zwischen der Silagerutsche 3 und der Schnittfläche 40 eines Fahrsilos 4 zu unterbinden. Hierzu ist die Abdeckplatte 32 in zwei Führungen 34 an den beiden Seitenwänden 31 in ihrer Plattenebene verschieblich geführt. Weiterhin ist die Abdeckplatte 32 durch eine Kraft, die hier durch eine Zugfeder 37 erzeugt wird, in Ausschubrichtung 38 vorbelastet. Die Zugfeder 37 ist mittels eines ersten Federträgers 35 mit dem in der Zeichnung linken Ende der Abdeckplatte 32 und mittels eines zweiten Federträgers 36 mit dem in der Zeichnung rechten oberen Ende der Seitenwand 31 der Silagerutsche 3 verbunden. Hierdurch wird die Abdeckplatte 32 mit ihrer in der Zeichnung rechts liegenden freien Vorderkante stets in Richtung zur Schnittfläche 40 des Fahrsilos 4 ausgeschoben. Damit sich die Abdeckplatte 32 nicht in die Silage eindrückt, trägt sie dort eine durchgehende Rolle 33, die um eine parallel zur Vorderkante der Abdeckplatte 32 verlaufende Achse drehbar ist. Diese Rolle 33 rollt bei der im Betrieb der Fräse 1 auftretenden Absenkbewegung in Richtung des Bewegungspfeiles 39 entlang der Schnittfläche 40 des Fahrsilos ab.

Im Betrieb der Fräse 1 dreht sich die Fräswalze 2 während des überwiegenden Teils des Fräsvorganges in der durch den Drehpfeil 28 angegebenen Drehrichtung. Hierbei bewirken die Endbereiche 25 der Zinken 22 einen Abtrag von Silage aus dem Fahrsilo 4 mittels einer schleppenden oder ziehenden Wirkung. Diese schleppende oder ziehende Wirkung wird insbesondere dadurch erzielt, daß die Zinken 22 abgebogen sind. Die Abbiegung ist dabei bevorzugt so gewählt, daß die gedachten Verlängerungen 26 der freien Endbereiche 25 der Zinken 22 im wesentlichen eine Tangente an den Walzengrundkörper 20 bilden. Ein Festlaufen der Fräswalze 2 in der Silage ist so praktisch ausgeschlossen. Gleichzeitig kann sich die Silage aber auch nicht an den Zinken 22 festhalten; aufgrund der relativ hohen Drehzahl der Fräswalze 2 wird die Silage nach dem Ablösen aus dem Silo von den Zinken 22 abgeschleudert. Beim Abschleudern prallt die Silage gegen die Unterseite der Abdeckplatte 32 und fällt von dort auf den in der Zeichnung nach links unten hin abfallenden Boden 30 der Silagerutsche.

Wie oben schon erwähnt, ist die Drehrichtung der Fräswalze 2 umkehrbar. Die Drehrichtung entgegengesetzt zum Drehpfeil 28 wird insbesondere dann gewählt, wenn der Fräsvorgang ganz oben nahe der Oberkante des Fahrsilos beginnt, um ein Lockern der Silage durch Anheben nach oben auszuschließen. Sobald der Fräsvorgang einen genügend großen Abstand von der Oberkante des Fahrsilos 4 erreicht hat, erfolgt das weitere Abfräsen der Silage mit einer dem Drehpfeil 28 entsprechenden Drehrichtung der Fräswalze 2.

## Patentansprüche

1. Fräse (1), insbesondere für Geräte zur Entnahme von Silage aus einem Fahrsilo, mit einer Fräswalze (2), die aus einem rohrförmigen, drehantreibbaren Walzengrundkörper (20) und aus mehreren fest an diesem angebrachten, von diesem abestehenden Fräselementen (22) besteht,
**dadurch gekennzeichnet,**
daß die Fräselemente (22) starre zahnförmige Zinken mit in Hauptdrehrichtung der Fräswalze (2) abgewinkelten oder abgebogenen freien Endbereichen (25) sind.

2. Fräse nach Anspruch 1, dadurch gekennzeichnet, daß die gedachten Verlängerungen (26) der Mittelachsen der Endbereiche (25) in Richtung zum Walzengrundkörper (20) im wesentlichen Tangenten an diesen bilden.

3. Fräse nach Anspruch 1 oder 2, dadurch gekennzeichnet, daß die Zinken (22) mit gegenseitigem Versatz in Umfangsrichtung an dem Walzengrundkörper (20) angeordnet sind.

4. Fräse nach einem der vorangehenden Ansprüche, dadurch gekennzeichnet, daß die Zinken (22) entlang einer oder mehrerer Schraubenlinien an dem Walzengrundkörper (20) angeordnet sind.

5. Fräse nach einem der vorangehenden Ansprüche, dadurch gekennzeichnet, daß der Walzengrundkörper (20) und die Zinken (22) aus Stahl bestehen und miteinander verschweißt sind.

6. Fräse nach einem der vorangehenden Ansprüche, dadurch gekennzeichnet, daß die abgewinkelten oder abgebogenen Endbereiche (25) der Zinken (22) eine Länge aufweisen, die zwischen 20 und 50 % der gesamten Länge der Zinken (22) beträgt.

7. Fräse nach einem der vorangehenden Ansprüche, dadurch gekennzeichnet, daß der abgebogene oder abgewinkelte Endbereich (25) jedes Zinkens (22) mit dessen mit dem Walzengrundkörper (20) verbundenen Grundbereich (23) einen Winkel zwischen 30 und 60° bildet.

8. Fräse nach einem der vorangehenden Ansprüche, dadurch gekennzeichnet, daß für den Drehantrieb der Fräswalze (2) in dem Walzengrundkörper (20) ein Drehantriebsmotor (21) untergebracht ist.

9. Fräse nach einem der vorangehenden Ansprüche, dadurch gekennzeichnet, daß diese am freien Ende eines auf- und abwärts verstellbaren Silagefördermittels (3), z. B. einer nach oben offenen Silagerutsche angeordnet ist, daß in der Hauptdrehrichtung der Fräswalze (2) deren in die Silage (4) eingreifende Zinken (22) sich von unten nach oben bewegen und daß das Silagefördermittel (3) eine über der Fräswalze (2) angeordnete Abdeckplatte (32) umfaßt.

10. Fräse nach Anspruch 9, dadurch gekennzeichnet, daß die Abdeckplatte (32) in ihrer Plattenebene in Richtung zum freien Ende des Silagefördermittels (3) ausschiebbar und umgekehrt einschiebbar ist.

11. Fräse nach Anspruch 10, dadurch gekennzeichnet, daß die Abdeckplatte (32) in Ausschubrichtung durch eine Kraft vorbelastet oder vorbelastbar ist.

12. Fräse nach Anspruch 10 oder 11, dadurch gekennzeichnet, daß die Abdeckplatte (32) mit einer Verschiebungs-Synchronisiereinrichtung zum Schutz gegen Verkanten ausgestattet ist.

13. Fräse nach einem der Ansprüche 10 bis 12, dadurch gekennzeichnet, daß die freie äußere Kante der Abdeckplatte (32) mit mehreren einzelen oder einer durchgehenden Rolle (33) versehen ist.

14. Fräse nach einem der vorangehenden Ansprüche, dadurch gekennzeichnet, daß der Drehantrieb (21) der Fräswalze (2) in seiner Drehrichtung umkehrbar ist.
